# EUROPÄISCHE PATENTSCHRIFT

(11) **EP 4 616 474 B1**
(45) Veröffentlichungstag und Bekanntmachung des Hinweises auf die Patenterteilung: **15.07.2026**
(21) Anmeldenummer: 23794290.9
(22) Anmeldetag: 20.10.2023
(51) Int. Cl.: H01M 50/103, H01M 50/15, H01M 50/171, H01M 50/176, H01M 50/188, H01M 50/193, H01M 50/195, H01M 50/533, H01M 50/55

(54) **ZWEI KOMPONENTEN-VERGUSS FÜR EINEN AKKUMULATOR**
TWO-COMPONENT CASTING FOR AN ACCUMULATOR
ENROBAGE À DEUX COMPOSANTS POUR ACCUMULATEUR

(30) Priorität: 09.11.2022 EP 22206379
(43) Veröffentlichungstag der Anmeldung: 17.09.2025
(73) Patentinhaber: Hilti Aktiengesellschaft, 9494 Schaan (LI)
(72) Erfinder: BRITZ, Rory, 82319 Starnberg (DE); SELTMANN, Daniel, 86842 Türkheim (DE); HARTMANN, Markus, 87665 Mauerstetten (DE); HAUSER, Klaus, 86830 Schwabmünchen (DE); STANGER, Robert, 87600 Kaufbeuren (DE); FRENZEL, Mathias, 86944 Unterdießen (DE); ENDER, Moses, 86916 Kaufering (DE)
(74) Vertreter: Hilti Aktiengesellschaft Corporate Intellectual Property
(86) Internationale Anmeldenummer: PCT/EP2023/079256
(87) Internationale Veröffentlichungsnummer: WO 2024/099735

(56) Entgegenhaltungen:
- DE-A1- 102013 201 424
- DE-A1- 102020 200 063
- US-A1- 2019 372 182

## Beschreibung

Die vorliegende Erfindung betrifft einen Akkumulator, insbesondere als wiederlösbare Energieversorgung für eine Werkzeugmaschine, enthaltend wenigstens ein Energiespeicherelement mit einer Kontakteinrichtung, eine Steuervorrichtung, eine Vergusskammer und eine Akku-Schnittstelle zum wahlweisen Verbinden des Akkumulators mit einer Werkzeugmaschine oder Ladevorrichtung.

Akkumulatoren (auch Akku genannt) als Energieversorgung für eine Werkzeugmaschine sind gemäß dem Stand der Technik weitgehend bekannt. Diese Akkumulator enthalten für gewöhnlich eine Anzahl an Energiespeicherzellen (auch Akkuzellen genannt), die zum Aufnehmen, Speichern sowie Abgeben von elektrischer Energie dienen und ausgestaltet sind. Das Aufnehmen von elektrischer Energie in die Energiespeicherzellen kann auch als Laden (bzw. Aufladen) bezeichnet werden. Das Abgeben von elektrischer Energie aus den Energiespeicherzellen kann auch als Entladen bezeichnet werden.

Zum Aufladen bzw. Laden mit elektrischer Energie wird der Akkumulator für gewöhnlich mit einer Ladevorrichtung (auch Lader oder Charger genannt) verbunden. Die Ladevorrichtung leitet elektrische Energie gemäß einer vorbestimmten Ladeeinstellung (auch Lademodus genannt) mit festgelegten Parametern für den eigentlichen Ladevorgang an die einzelnen Energiespeicherzellen der Akkumulators.

Insbesondere bei intensiver Beanspruchung des Akkumulators, d.h. bei einer hohen und schnellen Abgabe von elektrischer Energie, erwärmen sich die Energiespeicherelemente des Akkumulators bis zu einem kritischen Wert. Mit anderen Worten: der Akkumulator kann sich hierbei ungewollt so weit erhitzen, dass eine auch eine dauerhafte Beschädigung nicht ausgeschlossen werden kann.

Herkömmliche und auf dem Markt erhältliche System zum Kühlen eines Akkumulators sind jedoch oftmals komplex und/oder teuer.

Aufgabe der vorliegenden Erfindung ist das vorstehend beschriebene Problem zu lösen.

Die Aufgabe wird ebenfalls gelöst durch den Gegenstand des Anspruchs 1. Weitere vorteilhafte Ausführungen der Erfindung sind in den entsprechenden Unteransprüchen beschrieben.

Die Aufgabe wird insbesondere gelöst durch einen Akkumulator, insbesondere als wiederlösbare Energieversorgung für eine Werkzeugmaschine, enthalten wenigstens ein Energiespeicherelement mit einer Kontakteinrichtung, eine Steuervorrichtung, eine Vergusskammer und eine Akku-Schnittstelle zum wahlweisen Verbinden des Akkumulators mit einer Werkzeugmaschine oder Ladevorrichtung.

Erfindungsgemäß ist vorgesehen, dass in der Vergusskammer wenigstens ein erstes und zweites Vergussmaterial enthalten ist, wobei das erste Vergussmaterial eine höhere Wärmeleitfähigkeit aufweist als das zweite Vergussmaterial und das zweite Vergussmaterial eine geringere elektrische Leitfähigkeit aufweist als das erste Vergussmaterial und wobei das zweite Vergussmaterial wenigstens anteilig die Kontakteinrichtung des wenigstens einen Energiespeicherelements bedeckt.

Entsprechend einem vorteilhaften Ausführungsbeispiel kann es möglich sein, dass das erste Vergussmaterial wenigstens anteilig einen wärmeleitfähigen Epoxidharz-Klebstoff enthält.

Des Weiteren kann das erste Vergussmaterial wenigstens anteilig ein duroplastisches Polymer enthalten. Die Wärmeleitfähigkeit kann durch das Hinzufügen wenigstens eines wärme- und/oder elektrischleitfähigen Füllstoff erzeugt werden.

Gemäß einem weiteren vorteilhaften Ausführungsbeispiel kann es möglich sein, dass das zweite Vergussmaterial wenigstens anteilig ein elektrisch nichtleitfähigen Silikon enthält, wobei dieses in Form eines 1K oder 2K-Silikons ausgebildet ist.

Entsprechend einem vorteilhaften Ausführungsbeispiel kann es möglich sein, dass das erste Vergussmaterial wenigsten 50% des Volumens der Vergusskammer ausfüllt.

Gemäß einem weiteren vorteilhaften Ausführungsbeispiel kann es möglich sein, dass das erste Vergussmaterial weniger als 50% des Volumens der Vergusskammer ausfüllt.

Entsprechend einem vorteilhaften Ausführungsbeispiel kann es möglich sein, dass das erste Vergussmaterial eine Wärmeleitfähigkeit von 0,75 bis 1 W/(m*K) aufweist. Des Weiteren kann das erste Vergussmaterial eine Wärmeleitfähigkeit von 3 bis 10 W/(m*K) aufweisen.

Gemäß einem weiteren vorteilhaften Ausführungsbeispiel kann es möglich sein, dass das erste Vergussmaterial auf Polyurethan basiert und vorzugsweise ein Elastomer ist.

Entsprechend einem vorteilhaften Ausführungsbeispiel kann es möglich sein, dass das erste Vergussmaterial die Brennbarkeitsklasse V0 nach UL94 aufweist.

Gemäß einem weiteren vorteilhaften Ausführungsbeispiel kann es möglich sein, dass das wenigstens eine Energiespeicherelement auf einer Lithium-Ionen- oder Li-Polymer-Technology basiert.

Entsprechend einem vorteilhaften Ausführungsbeispiel kann es möglich sein, dass eine Leerlaufspannung auf 60 Volt begrenzt ist.

Weitere Vorteile ergeben sich aus der folgenden Figurenbeschreibung. In der Figur ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:
- Figur 1: eine seitliche Ansicht auf eine Werkzeugmaschine und einem erfindungsgemäßen Akkumulator;
- Figur 2: eine seitliche Schnittansicht auf den erfindungsgemäßen Akkumulator;
- Figur 3: eine Schnittansicht auf den Akkumulator entlang der Schnittebene A - A aus Figur 2; und

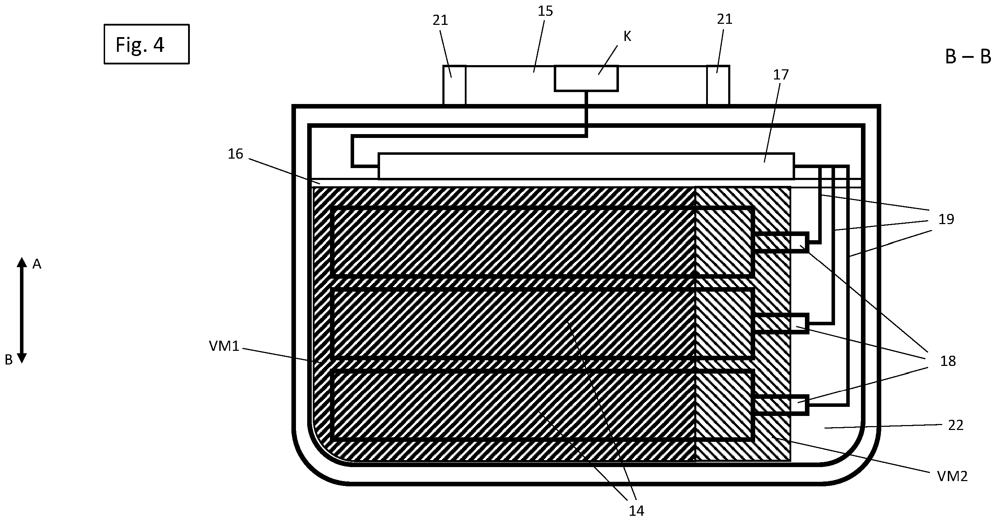

- Figur 4: eine Schnittansicht auf den Akkumulator entlang der Schnittebene B - B aus Figur 2.

### Ausführungsbeispiele:

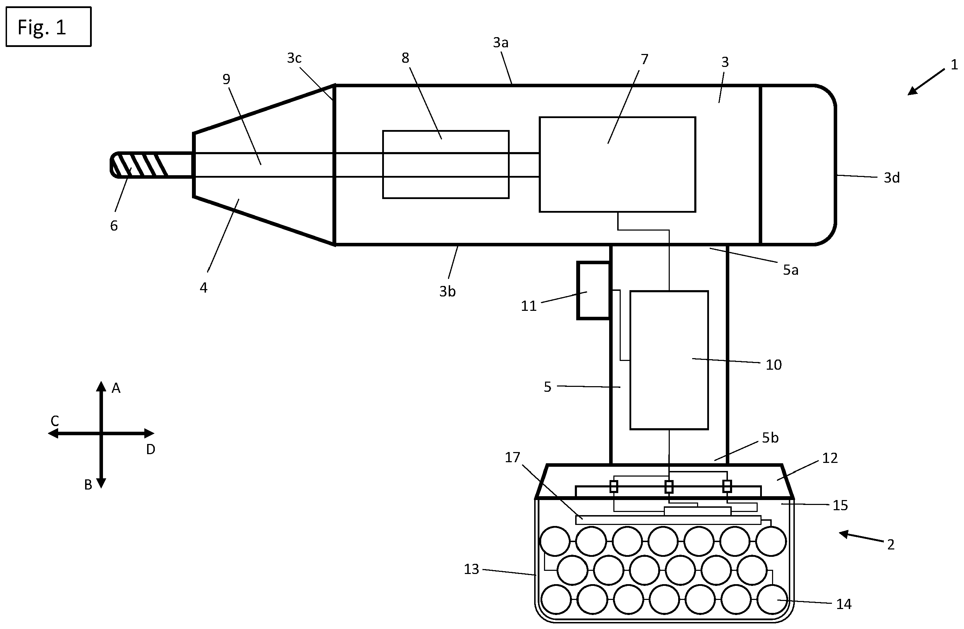

Figur 1 zeigt ein eine Werkzeugmaschine 1 und einen Akkumulator 2 gemäß einer beispielhaften Ausführungsform. Der Akkumulator 2 ist mit der Werkzeugmaschine 2 wiederlösbar verbunden, um die Werkzeugmaschine 2 mit elektrischer Energie zu versorgen.

Die Werkzeugmaschine 1 ist in der gezeigten Ausführungsform als Bohrmaschine ausgestaltet. Alternativ kann die Werkzeugmaschine 1 auch als Schrauber, Bohrhammer, Säge, Schleifgerät oder dergleichen ausgestaltet sein.

Wie in Figur 1 angedeutet enthält die als Bohrmaschine ausgestaltete Werkzeugmaschine 1 im Wesentlichen ein Werkzeugmaschinengehäuse 3 mit einer Werkzeugaufnahme 4 und einem Handgriff 5.

Die Werkzeugaufnahme 4 dient zum Aufnehmen und Halten eines Werkzeugs 6.

Bei dem Werkzeug 6 handelt es sich in dem vorliegenden Ausführungsbeispiel um einen Bohrer. Alternativ kann das Werkzeug 6 auch als Schrauben-Bit ausgestaltet sein.

Im Inneren des Werkzeugmaschinengehäuses 3 ist unter anderem ein Antrieb 7, ein Getriebe 8, eine Abtriebswelle 9 und eine Steuereinheit 10 vorgesehen.

Der Antrieb 7 ist beispielsweise als bürstenloser Elektromotor ausgestaltet und dient zum Erzeugen eines Drehmoments.

Die Steuereinheit 10 regelt und steuert die Funktionen bzw. das Verhalten der Werkzeugmaschine 1 und insbesondere des Antriebs 7, d.h. die Drehrichtung und Drehzahl des Antriebs 7.

Der Handgriff 5 enthält wiederum einen Betätigungsschalter 11, ein oberes Ende 5a und ein unteres Ende 5b. Der Betätigungsschalter 5 ist mit der Steuereinheit 10 verbunden, sodass ein Betätigen des Betätigungsschalters 11 zu einer Aktivierung des Antriebs 7 bzw. der Werkzeugmaschine 1 führt.

Wie ebenfalls in Figur 1 gezeigt, ist der Antrieb 7, das Getriebe 8, die Abtriebswelle 9 und die Werkzeugaufnahme 4 so zueinander angeordnet, dass ein von dem Antrieb 7 erzeugtes Drehmoment über das Getriebe 8 und die Abtriebswelle 9 zu der Werkzeugaufnahme 4 gelangen kann. Durch die Werkzeugaufnahme 4 wird das vom Antrieb erzeugte Drehmoment schließlich auf das Werkzeug 6 übertragen.

Das Werkzeugmaschinengehäuse 3 weist des Weiteren eine Oberseite 3a, eine Unterseite 3b, ein vorderes Ende 3c und ein hinteres Ende 3d auf.

An dem vorderen Ende ist die Werkzeugaufnahme positioniert. An der Unterseite 3b und in der Nähe des hinteren Endes 3d des Werkzeugmaschinengehäuses 3 ist das obere Ende 5a des Handgriffs 5 befestigt. An dem unteren Ende 5b des Handgriffs 5 ist eine Werkzeugmaschinenschnittstelle 12 positioniert. Die Werkzeugmaschinenschnittstelle 12 dient zum wiederlösbaren Verbinden der Werkzeugmaschine 1 mit dem Akkumulator 2.

Gemäß einem alternativen und in den Figuren nicht gezeigten Ausführungsbeispiel kann die Werkzeugmaschine 1 auch so ausgestaltet sein, dass diese mit mehr als einem Akkumulator 2 als Energiequelle verbunden ist.

Der in dem Ausführungsbeispiel beschriebene Akkumulator 2 kann insbesondere als Energiespeichervorrichtung bzw. elektrische Energiequelle für die Werkzeugmaschine 1 dienen. Der Akkumulator 2 enthält dabei im Wesentlichen ein Akku-Gehäuse 13, eine Anzahl an Energiespeicherzellen 14, eine Akku-Schnittstelle 15, eine Vergusskammer 16 sowie eine Steuerungseinrichtung 17.

Die Energiespeicherzellen 14 können auch als Akku-Zellen bezeichnet werden.

Die Akku-Schnittstelle 15 dient zum elektrischen bzw. elektronischen Verbinden des Akkumulators 2 mittels der Werkzeugmaschinenschnittstelle 12 mit der Werkzeugmaschine 1. Die Akku-Schnittstelle 15 enthält hierzu ein Pluskontakt P, ein Minuskontakt M sowie ein Kommunikationskontakt K. Der Pluskontakt P und Minuskontakt M dienen zum Übertragen von elektrischer Energie von den Energiespeicherzellen 14 des Akkumulators 2 zu den Verbrauchern (insbesondere der Antrieb 7) der Werkzeugmaschine 1.

Der Kommunikationskontakt K dient wiederum zum Kommunizieren der Steuerungseinrichtung 17 des Akkumulators 2 mit der Steuereinheit 10 der Werkzeugmaschine 1. Für die Kommunikation zwischen dem Akkumulator 2 mit der Werkzeugmaschine 1 werden Daten und Informationen in Form von Signalen ausgetauscht.

Die Energiespeicherzellen 14 dienen zum Aufnehmen, Speichern und erneuten Abgeben elektrischer Energie. Wie in den Figuren angedeutet, sind die Energiespeicherzellen 14 in zylindrischer Form und auf Basis einer Lithium-Ionen-Technologie ausgestaltet. Wie in den Figuren angedeutet, enthält jede Energiespeicherzelle 14 an einem Ende eine Kontakteinrichtung 18, die zur Übertragung elektrischer Energie dient. Wie ebenfalls in den Figuren gezeigt sind die einzelnen Kontakteinrichtung 18 über entsprechende Leitungen 19 mit der Steuerungseinrichtung 17 verbunden.

Alternativ können die Energiespeicherzellen 14 auch auf einer anderen geeigneten Technologie basieren.

Die zylindrische Form der Energiespeicherzellen 14 ist ebenfalls optional, sodass auch jede andere geeignete Form bzw. Geometrie gewählt werden kann. So ist es insbesondere auch möglich, dass die Energiespeicherzellen 14 als Pouchzellen ausgestaltet sind.

Es ist zudem auch möglich, dass der Akkumulator 2 sowohl zylindrische Energiespeicherzellen als auch Pouch-Zellen enthält. Es ist insbesondere möglich, dass der Akkumulator 2 eine einzige zylindrische Energiespeicherzelle und eine einzige Pouchzelle enthält.

Die Steuerungseinrichtung 17 regelt und steuert verschiedene Funktionen des Akkumulators 2. Darüber hinaus ist die Steuerungseinrichtung 17 so mit den Energiespeicherzellen 14 und der Akku-Schnittstelle 15 über entsprechende Leitungen 20 verbunden, dass elektrische Energie von den Energiespeicherzellen 14 über die Steuerungseinrichtung 17 zu der Akku-Schnittstelle 15 gelangen kann.

Zum wiederlösbaren mechanischen Koppeln des Akkumulators 2 mit der Werkzeugmaschine 1 enthalt das System aus Werkzeugmaschine 1 und Akkumulator 2 eine Schienenvorrichtung 21. Wie in den Figuren angedeutet ist die Schienenvorrichtung 21 zwischen der Akku-Schnittstelle 15 und der Werkzeugmaschinenschnittstelle 12 positioniert, sodass der Akkumulator 2 entlang der Schienenvorrichtung 21 und in Pfeilrichtung C auf die Werkzeugmaschine 1 geschoben und in Pfeilrichtung D wieder von der Werkzeugmaschine 1 entfernt (abgeschoben) werden kann. Wenn der Akkumulator 2 mit Hilfe der Schienenvorrichtung 21 mit der Werkzeugmaschine 1 gekoppelt ist, steht der Pluskontakt P, der Minuskontakt M sowie der Kommunikationskontakt K des Akkumulators 2 mit den entsprechenden Plus- und Minuskontakten P, M sowie dem Kommunikationskontakt K der Werkzeugmaschine 1 in Kontakt. Elektrische Energie sowie elektrische Signale können dann von dem Akkumulator 2 zu der Werkzeugmaschine 1 gelangen.

Eine (in den Figuren nicht gezeigte) Verriegelungsvorrichtung dient zum wiederlösbaren Verbinden des Akkumulators 2 mit der Werkzeugmaschine 1.

Die Vergusskammer 16 ist im Wesentlichen als Wanne mit einem Hohlraum 22 ausgestaltet. In dem Hohlraum 22 sind die Energiespeicherzellen 14 positioniert.

Des Weiteren ist die Vergusskammer 16 so ausgestaltet, dass flüssiges Vergussmaterial VM eingeführt werden kann und gehalten wird.

In den Akkumulator 2 gemäß eines ersten Ausführungsbeispiels ist zu einer Vielzahl an Energiespeicherelementen 14 ein erstes Vergussmaterial VM1 und zweites Vergussmaterial VM2 gefüllt.

Das erste Vergussmaterial VM1 weist dabei eine höhere Wärmeleitfähigkeit auf als das zweite Vergussmaterial VM2.

Gemäß dem ersten Ausführungsbeispiel beträgt die Wärmeleitfähigkeit des ersten Vergussmaterials VM1 0,8 W/(m*K).

Die Wärmeleitfähigkeit des zweiten Vergussmaterials VM2 beträgt hingegen 0,2 W/(m*K).

Alternativ kann die Wärmeleitfähigkeit des ersten Vergussmaterials VM1 0,75 bis 1 W/(m*K). Der Wert der Wärmeleitfähigkeit des zweiten Vergussmaterials VM2 beträgt dabei im Wesentlichen die Hälfte des Werts der Wärmeleitfähigkeit des ersten Vergussmaterials VM1. Alternativ kann der Wert der Wärmeleitfähigkeit des zweiten Vergussmaterials VM2 lediglich ein Viertel (= 1/4) des Werts der Wärmeleitfähigkeit des ersten Vergussmaterials VM1 betragen.

Darüber hinaus weist das zweite Vergussmaterial VM2 eine geringere elektrische Leitfähigkeit (spezifischen elektrischen Widerstand, d.h. mindestens 10¹⁰ Ω cm) auf als das erste Vergussmaterial VM1. Der Wert der elektrischen Leitfähigkeit des ersten Vergussmaterials VM1 ist dabei wenigstens doppelt so groß wie der Wert der elektrischen Leitfähigkeit des zweiten Vergussmaterials VM2.

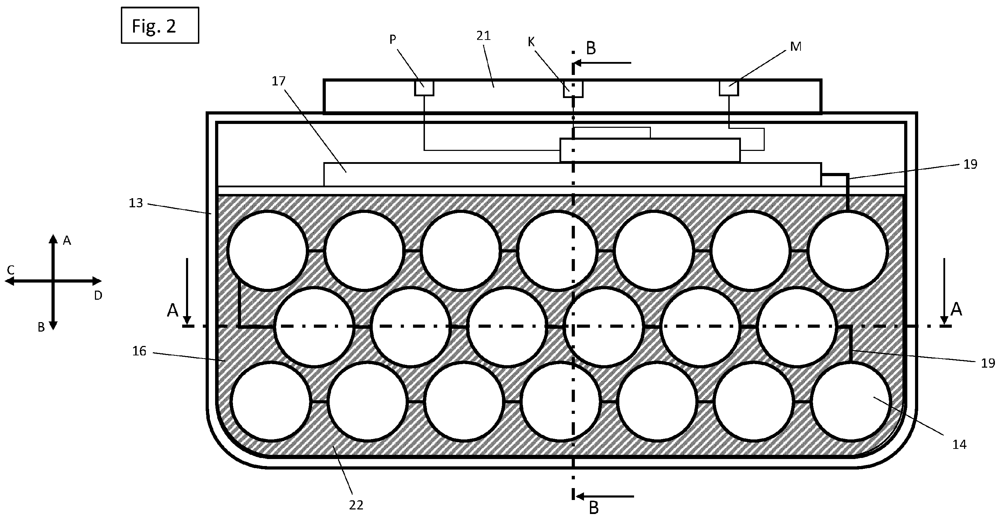

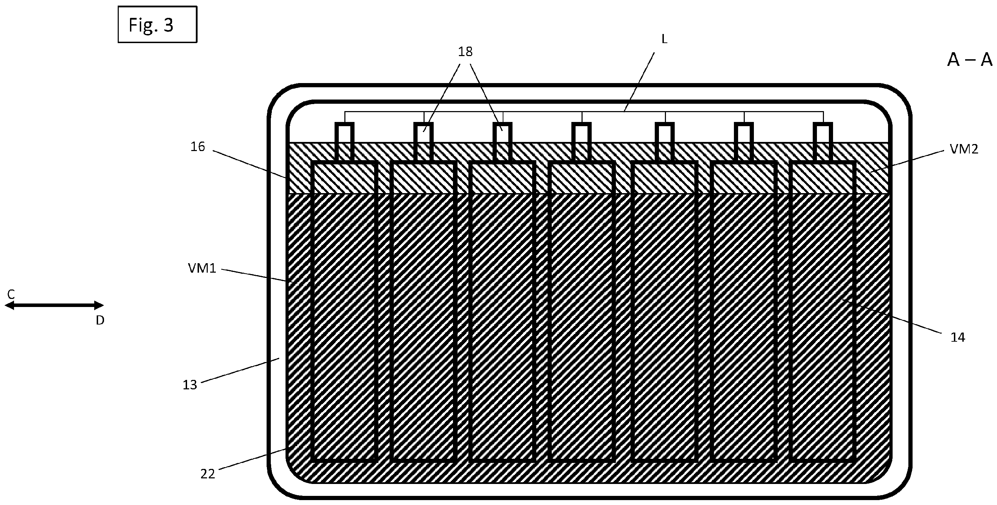

Wie insbesondere in den Figuren 2 und 3 angedeutet, ist die Vergusskammer 16 nicht zu denselben Volumenanteilen mit dem ersten und zweiten Vergussmaterial VM1, VM2 angefüllt. Gemäß dem ersten Ausführungsbeispiel füllt das erste Vergussmaterial VM1 ungefähr 70% des Volumens der Vergusskammer 16. Das zweite Vergussmaterial VM2 befüllt hingegen ungefähr 20% des Volumens der Vergusskammer 16. Die verbleibenden 10% des Volumens der Vergusskammer 16 sind mit Luft gefüllt. Das ersten und zweite Vergussmaterial VM1, VM2 sind so in der Vergusskammer 16 positioniert, dass das zweite Vergussmaterial VM2 einen oberen Anteil der Energiespeicherzellen 14 mit der jeweiligen Kontakteinrichtung 18 umhüllt. Ein Anteil der Kontakteinrichtung 18 bleibt dabei frei von dem zweiten Vergussmaterial VM2, sodass jeweils eine Leitung 20 von einem freien (unbedeckten) Ende der Kontakteinrichtung 18 zu der Steuerungseinrichtung 17 führt.

Alternativ kann das erste Vergussmaterial 70% des Volumens der Vergusskammer 16 und das zweite Vergussmaterial VM2 30% des Volumens der Vergusskammer 16 befüllen, sodass kein Volumen der Vergusskammer 16 mehr mit Luft gefüllt ist.

Durch den relativ hohen Anteil an dem zweiten Vergussmaterial VM2 ist eine nahezu optimale Wärmeabfuhr von den Energiespeicherzellen 14 gewährleistet.

### Bezugszeichenliste

- 1: Werkzeugmaschine
- 2: Akkumulator
- 3: Werkzeugmaschinengehäuse
- 3a: Oberseite des Werkzeugmaschinengehäuses
- 3b: Unterseite des Werkzeugmaschinengehäuses
- 3c: vorderes Ende des Werkzeugmaschinengehäuses
- 3d: hinteres Ende des Werkzeugmaschinengehäuses
- 4: Werkzeugaufnahme
- 5: Handgriff
- 5a: oberes Ende des Handgriffs
- 5b: unteres Ende des Handgriffs
- 6: Werkzeug
- 7: Antrieb
- 8: Getriebe
- 9: Abtriebswelle
- 10: Steuereinheit
- 11: Betätigungsschalter
- 12: Werkzeugmaschinenschnittstelle
- 13: Akku-Gehäuse
- 14: Energiespeicherzellen
- 15: Akku-Schnittstelle
- 16: Vergusskammer
- 17: Steuerungseinrichtung
- 18: Kontakteinrichtung
- 19, 20: Leitung
- 21: Schienenvorrichtung
- 22: Hohlraum
- P: Pluskontakt
- M: Minuskontakt
- K: Kommunikationskontakt

## Patentansprüche

1. Akkumulator (2), insbesondere als wiederlösbare Energieversorgung für eine
Werkzeugmaschine (1), enthaltend wenigstens ein Energiespeicherelement (14) mit einer Kontakteinrichtung (18), eine Steuerungseinrichtung (17), eine Vergusskammer (16) und eine Akku-Schnittstelle (15) zum wahlweisen Verbinden des Akkumulators (2) mit einer Werkzeugmaschine (1) oder Ladevorrichtung,
**dadurch gekennzeichnet, dass** in der Vergusskammer (16) wenigstens ein erstes und zweites Vergussmaterial (VM1, VM2) enthalten ist, wobei das erste Vergussmaterial (VM1) eine höhere Wärmeleitfähigkeit aufweist als das zweite Vergussmaterial (VM2) und das zweite Vergussmaterial (VM2) eine geringere elektrische Leitfähigkeit aufweist als das erste Vergussmaterial (VM1) und wobei das zweite Vergussmaterial (VM2) wenigstens anteilig die Kontakteinrichtung (18) des wenigstens einen Energiespeicherelements (14) bedeckt.

2. Akkumulator (2) nach Anspruch 1,
**dadurch gekennzeichnet, dass** das erste Vergussmaterial (VM1) wenigstens anteilig einen wärmeleitfähigen Epoxidharz-Klebstoff enthält.

3. Akkumulator (2) nach Anspruch 1 oder 2,
**dadurch gekennzeichnet, dass** das zweite Vergussmaterial (VM2) wenigstens anteilig ein elektrisch nichtleitfähigen Silikon enthält, wobei dieses in Form eines 1K oder 2K-Silikons ausgebildet ist.

4. Akkumulator (2) nach wenigstens einem der Ansprüche 1 bis 3,
**dadurch gekennzeichnet, dass** das erste Vergussmaterial (VM1) wenigsten 50% des Volumens der Vergusskammer (16) ausfüllt.

5. Akkumulator (2) nach wenigstens einem der Ansprüche 1 bis 3,
**dadurch gekennzeichnet, dass** das erste Vergussmaterial (VM1) weniger als 50% des Volumens der Vergusskammer (16) ausfüllt.

6. Akkumulator (2) nach wenigstens einem der Ansprüche 1 bis 3,
**dadurch gekennzeichnet, dass** das erste Vergussmaterial (VM1) eine Wärmeleitfähigkeit von 0,75 bis 1 W/(m*K) aufweist.

7. Akkumulator (2) nach wenigstens einem der Ansprüche 1 bis 6,
**dadurch gekennzeichnet, dass** das erste Vergussmaterial (VM1) auf Polyurethan basiert und vorzugsweise ein Elastomer ist.

8. Akkumulator (2) nach wenigstens einem der Ansprüche 1 bis 7,
**dadurch gekennzeichnet, dass** das erste Vergussmaterial (VM1) die Brennbarkeitsklasse V0 nach UL94 aufweist.

9. Akkumulator (2) nach wenigstens einem der Ansprüche 1 bis 8,
**dadurch gekennzeichnet, dass** das wenigstens eine Energiespeicherelement (14) auf einer Lithium-Ionen- oder Li-Polymer-Technology basiert.

10. Akkumulator (2) nach wenigstens einem der Ansprüche 1 bis 9,
**dadurch gekennzeichnet, dass** eine Leerlaufspannung auf 60 Volt begrenzt ist.

## Claims

1. Rechargeable battery (2), in particular as a removable energy supply for a power tool (1), which contains at least one energy storage element (14) with a contact device (18), a control device (17), a potting chamber (16), and a rechargeable battery interface (15) for selectively connecting the rechargeable battery (2) to a power tool (1) or charging apparatus,
**characterized in that** at least a first and second potting material (VM1, VM2) is contained in the potting chamber (16), wherein the first potting material (VM1) has a higher thermal conductivity than the second potting material (VM2) and the second potting material (VM2) has a lower electrical conductivity than the first potting material (VM1), and wherein the second potting material (VM2) covers at least a part of the contact device (18) of the at least one energy storage element (14).

2. Rechargeable battery (2) according to Claim 1,
**characterized in that** the first potting material (VM1) contains at least in part a thermally conductive epoxy resin adhesive.

3. Rechargeable battery (2) according to Claim 1 or 2,
**characterized in that** the second potting material (VM2) contains at least in part an electrically non-conductive silicone, wherein the latter takes the form of a 1K or 2K silicone.

4. Rechargeable battery (2) according to at least one of Claims 1 to 3,
**characterized in that** the first potting material (VM1) fills at least 50% of the volume of the potting chamber (16).

5. Rechargeable battery (2) according to at least one of Claims 1 to 3,
**characterized in that** the first potting material (VM1) fills less than 50% of the volume of the potting chamber (16).

6. Rechargeable battery (2) according to at least one of Claims 1 to 3,
**characterized in that** the first potting material (VM1) has a thermal conductivity of 0.75 to 1 W/(m*K).

7. Rechargeable battery (2) according to at least one of Claims 1 to 6,
**characterized in that** the first potting material (VM1) is polyurethane-based and is preferably an elastomer.

8. Rechargeable battery (2) according to at least one of Claims 1 to 7,
**characterized in that** the first potting material (VM1) has a UL94 flammability rating of V0.

9. Rechargeable battery (2) according to at least one of Claims 1 to 8,
**characterized in that** the at least one energy storage element (14) is based on lithiumion or Li-polymer technology.

10. Rechargeable battery (2) according to at least one of Claims 1 to 9,
**characterized in that** a no-load voltage is limited to 60 volts.

## Revendications

1. Accumulateur (2), en particulier sous la forme d'une alimentation électrique amovible pour une machine-outil (1), contenant au moins un élément de stockage d'énergie (16) comportant un dispositif de contact (18), un dispositif de commande (17), une chambre d'enrobage (14) et une interface d'accumulateur (15) pour connecter au choix l'accumulateur (2) à une machine-outil (1) ou à un dispositif de charge,
**caractérisé en ce que** la chambre d'enrobage (16) contient au moins un premier et un second matériau d'enrobage (VM1, VM2), le premier matériau d'enrobage (VM1) présentant une conductivité thermique supérieure à celle du second matériau d'enrobage (VM2) et le second matériau d'enrobage (VM2) présentant une conductivité électrique inférieure à celle du premier matériau d'enrobage (VM1), et le second matériau d'enrobage (VM2) recouvrant au moins partiellement le dispositif de contact (18) de l'au moins un élément de stockage d'énergie (14).

2. Accumulateur (2) selon la revendication 1,
**caractérisé en ce que** le premier matériau d'enrobage (VM1) contient au moins en partie une colle à base de résine époxy thermoconductrice.

3. Accumulateur (2) selon la revendication 1 ou 2,
**caractérisé en ce que** le second matériau d'enrobage (VM2) contient au moins en partie une silicone électriquement non conductrice, celle-ci présentant la forme de silicone 1K ou 2K.

4. Accumulateur (2) selon au moins l'une des revendications 1 à 3,
**caractérisé en ce que** le premier matériau d'enrobage (VM1) remplit au moins 50 % du volume de la chambre d'enrobage (16).

5. Accumulateur (2) selon au moins l'une des revendications 1 à 3,
**caractérisé en ce que** le premier matériau d'enrobage (VM1) remplit moins de 50 % du volume de la chambre d'enrobage (16).

6. Accumulateur (2) selon au moins l'une des revendications 1 à 3,
**caractérisé en ce que** le premier matériau d'enrobage (VM1) présente une conductivité thermique de 0,75 à 1 W/(m*K).

7. Accumulateur (2) selon au moins l'une des revendications 1 à 6,
**caractérisé en ce que** le premier matériau d'enrobage (VM1) est à base de polyuréthane et est de préférence un élastomère.

8. Accumulateur (2) selon au moins l'une des revendications 1 à 7,
**caractérisé en ce que** le premier matériau d'enrobage (VM1) présente la classe d'inflammabilité V0 selon UL94.

9. Accumulateur (2) selon au moins l'une des revendications 1 à 8,
**caractérisé en ce que** l'au moins un élément de stockage d'énergie (14) est à base d'une technologie lithium ion ou Li-polymère.

10. Accumulateur (2) selon au moins l'une des revendications 1 à 9,
**caractérisé en ce qu'**une tension à vide est limitée à 60 Volts.
